# EUROPÄISCHE PATENTSCHRIFT

(11) **EP 4 313 460 B1**
(45) Veröffentlichungstag und Bekanntmachung des Hinweises auf die Patenterteilung: **11.09.2024**
(21) Anmeldenummer: 22717088.3
(22) Anmeldetag: 19.03.2022
(51) Int. Cl.: B23F 5/04, B23F 23/12, B23Q 17/09, B24B 1/00, B24B 49/04, B24B 51/00, B23F 1/02, G01B 7/28, G01B 11/24, G05B 19/18

(54) **VERFAHREN ZUM SCHLEIFEN EINES WERKSTÜCKS MIT EINER VERZAHNUNG ODER EINEM PROFIL**
METHOD FOR GRINDING A WORKPIECE WITH A TOOTHING OR A PROFILE
PROCÉDÉ DE MEULAGE D'UNE PIÈCE EN DENTURE OU EN PROFILÉ

(30) Priorität: 30.03.2021 DE 102021108073
(43) Veröffentlichungstag der Anmeldung: 07.02.2024
(73) Patentinhaber: Kapp Niles GmbH & Co. KG, 96450 Coburg (DE)
(72) Erfinder: GRINKO, Sergiy, 96450 Coburg (DE)
(74) Vertreter: Gosdin, Carstensen & Partner Patentanwälte Partnerschaftgesellschaft mbB
(86) Internationale Anmeldenummer: PCT/EP2022/057261
(87) Internationale Veröffentlichungsnummer: WO 2022/207372

(56) Entgegenhaltungen:
- EP-A1- 2 149 425
- EP-A1- 3 456 453
- EP-A2- 0 229 596
- CH-A1- 716 583
- DE-A1- 102019 104 812
- DE-A1- 4 302 353
- US-A- 5 174 070
- US-A- 5 251 405
- US-A1- 2019 339 064
- US-A1- 2020 225 027

## Beschreibung

Die Erfindung betrifft ein Verfahren zum Schleifen eines Werkstücks mit einer Verzahnung oder einem Profil, wobei in der Schleifmaschine in einer einzigen Werkstückaufspannung in einem ersten Arbeitsschritt die Verzahnung oder das Profil mit einem Schrupp-Schleifwerkzeug vorbearbeitet wird und anschließend in einem zweiten Arbeitsschritt die Verzahnung oder das Profil mit einem Schlicht-Schleifwerkzeug fertigbearbeitet wird, wobei simultan mit dem ersten Arbeitsschritt (also während des Schrupp-Schleifens) die Verzahnung oder das Profil mittels mindestens eines Sensors vermessen wird, wobei eine die Verzahnung oder das Profil bestimmende geometrische Größe oder eine mit der Geometrie in Verbindung stehende Größe gemessen wird und wobei in der Maschinensteuerung die Abweichung der gemessenen geometrischen Größe oder der mit der Geometrie in Verbindung stehende Größe von einem Sollwert ermittelt wird.

Ein Verfahren der eingangs genannten Art ist aus der US 5 251 405 A1 bekannt. Beschrieben ist hier ein Schleifverfahren für das Schleifen einer Nockenwelle, wobei während des Schleifvorgangs ein Vermessen des zu schleifenden Profils erfolgt. Ähnliche und weitere Verfahren offenbaren die US 5 174 070 A1**,** die EP 0 229 596 A2**,** die DE 43 02 353 A1**,** die EP 2 149 425 A1**,** die EP 3 456 453 A1**,** die US 2019/0339064 A1**,** die CH 716 583 A1**,** die DE 10 2019 104 812 A1 und die US 2020/0225027 A1**.**

Bei der Herstellung eines Werkstücks, insbesondere mit einer Verzahnung, wird festgelegt, wie mit einer bestimmten Anzahl an Bearbeitungshüben, Vorschubgeschwindigkeiten und sonstigen Parameter die Verzahnung oder ein Profil zunächst in einem Schrupp-Prozess vorbearbeitet und anschließend in einem Schlicht-Prozess fertigbearbeitet wird. Dieser Prozess wird dann beim gesamten Los der zu bearbeitenden Werkstücke beibehalten.

Der Schrupp-Prozess zeichnet sich generell durch eine höhere Zustellung aus, d. h. durch eine höhere Materialabtragsrate, die auch mit einem höheren Werkzeugverschleiß einhergeht. Beim Schlicht-Prozess wird die Endoberfläche der Verzahnung bzw. des Profils erzeugt, d. h. die Finish-Qualität. Hier wird in der Regel nur noch eine geringe Zustellung gewählt, woraus eine geringere Materialabtragsrate und auch ein geringerer Werkzeugverschleiß resultieren.

Dabei ist zunächst unbekannt und auch nicht weiter beachtlich, wie hoch das jeweilige effektive Aufmaß auf dem Werkstück und insbesondere auf den Zahnflanken der Verzahnung sowie der Rohteilfehler sind. Der kombinierte Schrupp- und anschließende Schlicht-Prozess soll das gesamte Aufmaß zuverlässig abtragen und eine Verzahnung bzw. ein Profil hoher Qualität erzeugen. Der Prozess kann daher nicht berücksichtigen, wie hoch das jeweilige aktuelle Aufmaß bzw. der Rohteilfehler ist. Abhängig von den Gegebenheiten ergibt sich ein tatsächlicher Verschleiß sowohl am Schrupp-Schleifwerkzeug als auch am Schlicht-Schleifwerkzeug.

Abhängig vom tatsächlichen Verschleiß des Schrupp-Schleifwerkzeug ergibt sich eine mehr oder minder hohe Belastung des Schlicht-Schleifwerkzeugs, da dieses das nach dem Schruppen verbliebene Aufmaß entfernen muss. Bekannt ist es dabei, dass beim Schruppen das Werkzeug axial geshiftet werden kann, um Verschleiß des Werkzeugs in gewissem Umfang auszugleichen.

Der Erfindung liegt die **Aufgabe** zugrunde, ein gattungsgemäßes Verfahren so weiterzubilden, dass es möglich wird, die Bearbeitung effizienter zu machen und insbesondere den optimalen Zeitpunkt für einen neuen Abrichtvorgang oder für einen Werkzeugwechsel zu definieren. Weiterhin soll es möglich werden, in einfacher Weise eine Aussage über den Verschleißzustand insbesondere des Schrupp-Schleifwerkzeugs zu gewinnen. Die Lös u n g dieser Aufgabe durch die Erfindung sieht vor, dass zumindest als Schrupp-Schleifwerkzeug eine abrichtbare Schleifscheibe oder eine abrichtbare Schleifschnecke verwendet wird, wobei die Maschinensteuerung einen Abrichtvorgang für das Schrupp-Schleifwerkzeug veranlasst, wenn die Abweichung zwischen der gemessenen geometrischen Größe und deren Sollwert über einer vorgegebenen Grenze liegt.

Der Schrupp-Arbeitsschritt kann dabei in Form eines einzigen Schleifhubs durchgeführt werden. Er kann aber auch in Form mehrerer Teil-Schritte vorgenommen werden; in diesem Falle werden also mehrere Schrupp-Hübe durchgeführt.

Die Maschinensteuerung kann dann ein Signal ausgeben, wenn die Abweichung zwischen der gemessenen geometrischen Größe und deren Sollwert über einer vorgegebenen Grenze liegt.

Bevorzugt wird als Schlichtwerkzeug eine abrichtbare Schleifscheibe oder eine abrichtbare Schleifschnecke verwendet.

Dabei kann als Schrupp-Schleifwerkzeug und als Schlicht-Schleifwerkzeug auch ein und dasselbe Werkzeug verwendet werden, wobei unterschiedliche Abschnitte des Werkzeugs für das Schruppen und für das Schlichten vorgesehen sind.

Als relevante gemessene geometrische Größe kommt insbesondere die Zahnweite oder das Kugelmaß der Verzahnung infrage, wobei als Soll-Wert dasjenige Maß zu Grunde gelegt wird, welches idealerweise nach dem Schruppen vorliegen soll.

Die gemessene geometrische Größe kann auch der Profil-Winkelfehler (fHα) der Verzahnung sein.

Als Sensor kann ein optisch wirkender Sensor (insbesondere unter Einsatz eines Lasers), ein induktiv oder ein kapazitiv wirkender Sensor verwendet werden. Auch Sensoren, die Wirbelströme nutzen, sind generell geeignet.

Der (insbesondere induktive) Sensor kann dabei messend oder schaltend arbeiten. Der messende Sensor kann ständig den Materialabtrag auf der Oberfläche der Verzahnung bzw. des Profils erfassen und somit den Materialabtrag über dem Umfang des Werkstücks ermitteln. Der schaltende Sensor reagiert demgegenüber nur auf eine bestimmte voreingestellte Signalgrenze und schaltet von "Null" auf "Eins" und umgekehrt. In letztgenanntem Fall kann damit insbesondere erfasst werden, an welcher Umfangsstelle eines Zahnrads der geschliffene (geschruppte) Zahnkopf in den Erfassungsbereich des Sensors eintritt, woraus auf das abgetragene Aufmaß geschlossen werden kann. Dies sei insbesondere zu der oben angegebenen Vorgehensweise angemerkt, wonach auch eine mit der Geometrie in Verbindung stehende Größe ermittelt werden kann.

Möglich ist es auch, dass die Vermessung der Verzahnung oder des Profils während des Schruppens mit mindestens zwei Sensoren erfolgt, die in Richtung der Drehachse des Werkstücks versetzt, aber an derselben Umfangsposition des Werkstücks angeordnet sind. Alternativ kann auch vorgesehen werden, dass die Vermessung mit mindestens zwei Sensoren erfolgt, die in Richtung der Drehachse versetzt und an unterschiedlichen Umfangspositionen des Zahnrades angeordnet sind. Dies kann sich aus Gründen des zur Verfügung stehenden Bauraums als sehr vorteilhaft erweisen. Eine weitere alternative Möglichkeit sieht vor, dass die Vermessung mit einem einzigen Sensor erfolgt, der in Richtung der Drehachse des Werkstücks beweglich angeordnet ist.

Hiermit kann eine verbesserte Datenbasis gewonnen werden, um noch zuverlässiger auf den Verschleißzustand des Schrupp-Schleifwerkzeugs schließen zu können.

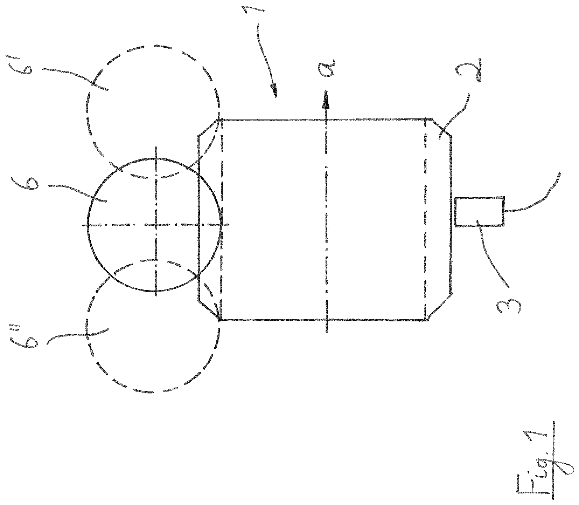

Das vorgeschlagene Konzept stellt also auf eine zeitlich parallele Vermessung der Verzahnung während des Schrupp-Schleifens ab. Der (z. B. induktive) Sensor steht beispielsweise in einer axialen Position, die der Mitte der Verzahnung entspricht (s. hierzu die nachfolgende Figur 1) und nimmt die Signale der Zahnlücken bzw. Zahnflanken auf. Wenn die Schleifscheibe bzw. Schleifschnecke diese axiale Position durchfährt, ändert sich die Zahndicke bzw. Zahnweite der Verzahnung. Der Sensor nimmt diese Änderung wahr, die Maschinensteuerung vergleicht den ermittelten Wert mit einem vorgegebenen Grenzwert und reagiert in Abhängigkeit davon.

Somit wird vorgeschlagen, die zu schleifenden Werkstücke, bevorzugt über die Breite des Zahnrads bzw. der Profilierung, während der Schrupp-Bearbeitung zu vermessen und ausgehend von der erfolgten Messung eine Aussage über den Zustand des Schrupp-Schleifwerkzeugs zu treffen.

Die Erfindung geht dabei von der Erkenntnis aus, dass die Beanspruchung des Schleifwerkzeugs, insbesondere der Schleifschnecke, meist beim Schruppen stattfindet; hier tritt Verschleiß am stärksten auf. Als Beurteilungskriterium wird bevorzugt, wie erwähnt, der Profilwinkelfehler der Verzahnung oder das diametrale Kugelmaß bzw. die Zahnweite herangezogen, wofür die entsprechenden Soll-Werte, die während des Schruppens ermittelt werden, zu Grunde gelegt werden.

Bei der Zahnweite handelt es sich um den Abstand, den zwei ebene und tangential an die Zahnflanken angelegte Messflächen haben, wobei bei der Messung eine definierte Anzahl an Zähnen zwischen den Messflächen liegt. Mit der Zahnweite kann die Zahndicke der Zähne bestimmt werden. Sie eignet sich als einfaches Qualitätsprüfungsverfahren für das geschliffene Zahnrad.

Das Kugelmaß (bzw. Rollenmaß) ist gleichermaßen eine Bestimmungsgröße für die Zahndicke der Verzahnung, wobei Kugeln (oder Rollen) in diametral gegenüberliegende Zahnlücken der Verzahnung eingefahren werden und der Abstand der Kugeln (oder Rollen) bestimmt wird. Demgemäß ist auch dieses Maß eine Bestimmungsgröße für die Zahndicke und eignet sich als Qualitätsprüfungsverfahren für das geschliffene Zahnrad.

Die Profilwinkel-Abweichung (fHα) wird im Allgemeinen durch die Abweichung der Ist-Winkellage der Evolvente einer Zahnflanke zur Soll-Winkellage beschrieben (in der Praxis ist es eigentlich die Abweichung der Winkellage des Flankenprofils, da auf dem hier üblichen Messprotokoll nicht die Evolvente, sondern nur die Abweichung der Profilmodifikation bezüglich der Soll-Modifikation dargestellt wird). Dabei bleibt die Formabweichung unberücksichtigt.

Nach dem Schlichten sind diese Parameter zur Beurteilung des Schrupp-Schleifwerkzeugs nicht mehr brauchbar, da durch das Schlichten eine einwandfreie Oberfläche der Verzahnung bzw. des Profils hergestellt ist. Das gilt zumindest solange, wie der Schlicht-Hub in der Lage ist, alle Fehler zu eliminieren, die nach dem Schruppen noch vorliegen.

Das vorgeschlagene Konzept stellt also auf eine In-Prozess-Überwachung geometrischer Parameter des zu bearbeitenden Werkstücks ab und ermöglicht eine effektive Verschleißkontrolle des Schrupp-Schleifwerkzeugs. Somit werden eine effiziente Möglichkeit der Überwachung des Schleifprozesses und eine adaptive Kontrolle der Bearbeitung ermöglicht.

In sehr vorteilhafter Weise kann somit eine Beurteilung des Verschleißzustandes des Schrupp-Schleifwerkzeugs erfolgen, ohne dass hierfür separate Zeiten für das Messen erforderlich sind; vielmehr erfolgt das Messen zeitlich parallel zum Schruppen.

In der Zeichnung sind Ausführungsbeispiele der Erfindung dargestellt. Es zeigen:
- Fig. 1: schematisch ein Zahnrad während der Bearbeitung mittels eines Schrupp-Schleifwerkzeugs, wobei der Start und das Ende des Schrupp-Schleifens angedeutet ist,
- Fig. 2: schematisch ein Zahn der Verzahnung des Zahnrads, der mit einem Sensor vermessen wird, wobei der Kontaktpunkt K dargestellt ist, an dem der Sensor ein Signal aufnimmt,
- Fig. 2a: schematisch den Verlauf des erfassten Sensorsignals für den Kontaktpunkt K während des Schruppens über der Zeit, wobei eine noch wenig verschlissene Schrupp-Schleifscheibe zum Einsatz kommt,
- Fig. 2b: schematisch den Verlauf des erfassten Sensorsignals für den Kontaktpunkt K während des Schruppens über der Zeit, wobei eine etwas mehr verschlissene, aber noch brauchbare Schrupp-Schleifscheibe zum Einsatz kommt,
- Fig. 2c: schematisch den Verlauf des erfassten Sensorsignals für den Kontaktpunkt K während des Schruppens über der Zeit, wobei eine noch weiter verschlissene, aber gerade noch brauchbare Schrupp-Schleifscheibe zum Einsatz kommt,
- Fig. 2d: schematisch den Verlauf des erfassten Sensorsignals für den Kontaktpunkt K während des Schruppens über der Zeit, wobei eine stark verschlissene und nicht mehr brauchbare Schrupp-Schleifscheibe zum Einsatz kommt,
- Fig. 3: schematisch die Darstellung der Profilwinkel-Abweichung (fHα) einer Verzahnung, die ordnungsgemäß geschruppt wurde (links), sowie eine Verzahnung, die mit einem bereits verschlissenen Schrupp-Schleifwerkzeug geschliffen wurde (rechts),
- Fig. 4: schematisch die Vermessung eines geometrischen Parameters der Verzahnung eines Zahnrads gemäß einer ersten Ausführungsform der Erfindung,
- Fig. 5: schematisch die Vermessung eines geometrischen Parameters der Verzahnung eines Zahnrads gemäß einer zweiten Ausführungsform der Erfindung,
- Fig. 6: schematisch die Vermessung eines geometrischen Parameters der Verzahnung eines Zahnrads gemäß einer dritten Ausführungsform der Erfindung, und
- Fig. 7: schematisch die Vermessung eines geometrischen Parameters der Verzahnung eines Zahnrads gemäß einer vierten Ausführungsform der Erfindung.

Die Produktivität des Schleifprozesses, insbesondere beim Wälzschleifen einer Verzahnung 2 eines Zahnrads 1 (s. Figur 1), wird im hier bevorzugten Falle des Einsatzes eines abrichtbaren Schleifwerkzeugs in erster Linie durch das Abrichtintervall bzw. die erreichbare Zahl der Werkstücke zwischen zwei Abricht-Vorgängen bestimmt. Zwischen den Abricht-Vorgängen verschleißt das Schleifwerkzeug vor allem beim Schruppen der Verzahnung.

Eine Schleifschnecke zu vermessen, um deren Verschleiß festzustellen, ist aufwendig und schwierig. Das vorliegende Konzept stellt darauf ab, dass eine Messung während des Schruppens der Verzahnung in der Schleifmaschine erfolgt, um hierdurch auf den Verschleiß des Schrupp-Schleifwerkzeugs schließen zu können. In vorteilhafter Weise fallen hierdurch keinerlei Nebenzeiten für den erforderlichen Mess-Vorgang an.

Neben der Zahnweite und dem Kugelmaß, welche zu diesem Zweck herangezogen werden können, kommt insbesondere auch der Profil-Winkelfehler fHα in Betracht. Besagte geometrische Parameter werden also während des Schruppens gemessen. Das Werkstück verbleibt hierbei in der Schleifmaschine. Zur Vermessung der genannten geometrischen Parameter ist ein Messsystem in der Maschine vorhanden.

In Figur 1 ist schematisch dargestellt, wie ein Werkstück in Form eines Zahnrads 1 mittels einer Schleifschnecke 6 geschliffen wird, wobei hier die Schleifschnecke 6 als Schrupp-Schnecke ausgebildet ist. Beim Schuppen der Verzahnung 2 des Zahnrads 1 wird die Schleifschnecke 6 relativ zum Werkstück 1 in Richtung der Drehachse a des Zahnrad 1 verschoben, bis die Verzahnung 2 über ihre gesamte axiale Erstreckung geschruppt ist. In Figur 1 ist mit der Position 6' die Schleifschnecke beim Eintritt in die Verzahnung 2 angedeutet, während die Position 6" das Ende des Schruppschleifens markiert. Während die Schleifschnecke 6 mit der Verzahnung 2 beim Schuppen in Eingriff ist, rotieren die Schleifschnecke 6 und das Zahnrad 1 gleichzeitig in bekannter Weise.

An einer vom Eingriff zwischen Schleifschnecke 6 und Verzahnung 1 in Umfangsrichtung des Zahnrad 1 versetzten bzw. entfernten Stelle ist ein Sensor 3 angeordnet (hier: axial mittig in der Verzahnung 2), der hier als induktiver Sensor ausgebildet ist und erfassen kann, ob sich der Zahnkopf mit den angrenzenden Zahnflanken im Bereich des Sensors 3 befindet oder ob die sich zwischen zwei Zähnen befindliche Zahnlücke den Sensor 3 passiert.

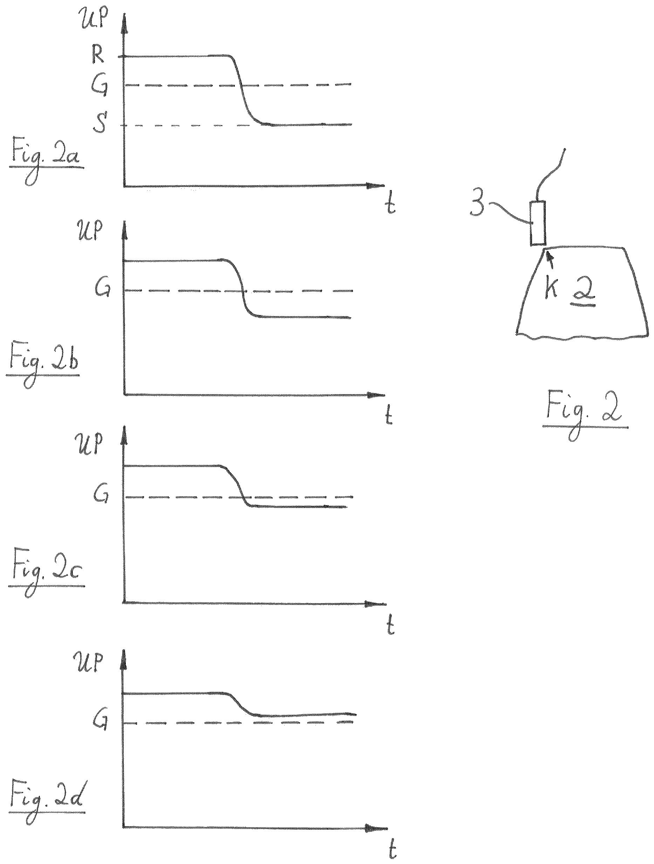

Diesbezüglich wird auf Figur 2 Bezug genommen, wo schematisch angedeutet ist, wie das unter dem Sensor 3 rotierende Zahnrad 1 mit der Verzahnung 2 den Sensor 3 passiert, so dass der Sensor 3 den Kontaktpunkt K erkennen kann, an dem die Verzahnung 2 in den Erfassungsbereich des Sensors 3 eintritt. Durch den Schruppvorgang wird Material (Aufmaß) von der Zahnflanke der Verzahnung 2 abgetragen, so dass sich die Umfangsposition UP (s. Figur 2a bis 2d), an der der Sensor 3 ein Signal erfasst, abhängig davon ist, in welcher Menge Aufmaß von der Zahnflanke der Verzahnung 2 abgeschliffen wurde.

Dies ist in den Figuren 2a bis 2d illustriert:
Aus Figur 2a geht hervor, dass die gemessene Umfangsposition UP eines Zahns der Verzahnung 2 zunächst bei einem Rohteilwert R liegt (hier ist das volle Aufmaß noch auf der Zahnflanke). Wenn dann über einen Schleifhub das Werkzeug 6 durch die Verzahnung geführt wird (s. Figur 1), wird an der axialen Position, an der sich der Sensor 3 befindet, durch den Abtrag von Aufmaß von der Zahnflanke ein verminderter Schruppwert S gemessen.

Es braucht hier nicht näher erläutert zu werden, dass mittels einer entsprechenden elektronischen Auswertung des Signals des Sensors 3 bei der Rotation des Zahnrad 1 über den Sensor 3 eine Vielzahl von Zahneintritten und Zahnaustritten erfasst und einem entsprechenden Zahn zugeordnet werden müssen. Nachdem die Zähnezahl des Zahnrads jedoch bekannt ist, können die jeweils erfassten Sensordaten den individuellen Zähnen zugeordnet werden, so dass für jeden Zahn der Verzahnung 2 die jeweiligen Kontaktpunkte K (s. Figur 2) sowohl für den Zahn eintritt als auch für den Zahnaustritt aus dem Bereich des Sensors 3 für die einzelnen Zähne bestimmt werden können.

Es ist als Variante dieses Vorgehens auch möglich, die Signalzuordnung nicht für die einzelnen Zähne der Verzahnung vorzunehmen, sondern die Daten für sämtliche Zähne zu erfassen und dann einen Mittelwert zu bilden, der somit das mittlere Aufmaß angibt, das durch das Schuppen abgetragen wurde. Beim Wälzschleifen wird in sämtlichen Zähnen der Verzahnung die Geometrie im Wesentlichen gleich erzeugt, weshalb es in diesem Falle vorteilhaft sein kann, einen Mittelwert des abgetragenen Aufmaßes zu berechnen und mit einem Referenzwert (d. h. Sollwert) zu vergleichen, der durch das Schuppen abzutragen ist. Dies entspricht auch der Praxis beim Verzahnungsmessen in einer Messmaschine, wenn die Werte für die Zahnweite bzw. für das Kugelmaß gemessen und gemittelt werden.

Wie aus Figur 2a hervorgeht, ergibt sich somit infolge des abgetragenen Aufmaßes an der Zahnflanke der schematisch in dieser Figur dargestellte Abfall vom Rohteilwert R zum Schruppwert S, wenn die Schleifschnecke die axiale Stelle der Verzahnung 2 passiert, an der der Sensor 3 angeordnet ist. Weiter eingetragen ist in dieser Figur ein Grenzwert G, der angibt, bis zu welchem Maß der Schruppvorgang durchgeführt werden muss, um ein einwandfreies Schuppen zu gewährleisten und die sich anschließende Schlichtoperation nicht zu überlasten.

Generell ergibt sich für jeden einzelnen Zahn des Zahnrads ein entsprechender Rohteilwert R und dann auch ein konkret von der Zahnflanke abzuschruppendes Aufmaß, um den Grenzwert G zu erreichen.

Der genannte Grenzwert G entspricht somit der Soll-Geometrie, die nach dem Schruppen erreicht sein soll. Der Schruppwert S entspricht der tatsächlichen Ist-Geometrie nach dem Schruppen.

In Figur 2b ist für einen fortgeschrittenen Verschleiß des Schruppwerkzeugs zu erkennen, dass nunmehr etwas weniger Aufmaß abgetragen wurde, dennoch aber der Grenzwert G unterschritten wurde. Der Schruppvorgang verlief somit noch ordnungsgemäß.

In Figur 2c ist zu sehen, dass bei weiter fortgeschrittenem Verschleiß nunmehr der Grenzwert gerade noch unterschritten wird, dass allerdings das Schruppwerkzeug nunmehr an sein Standzeitende gelangt und demnächst neu abgerichtet werden muss.

Wird nunmehr kein neuerliches Abrichten des Werkzeugs vorgenommen, würde sich der Verlauf ergeben, wie er in Figur 2d zu sehen ist: Durch den Schruppvorgang wurde jetzt nicht mehr genug Material von der Zahnflanke abgenommen, so dass der Grenzwert G nicht mehr unterschritten wird. Somit ist der Schruppvorgang nunmehr nicht mehr ordnungsgemäß durchgeführt, so dass es zu einer erhöhten Belastung des Schlichtwerkzeugs beim sich anschließenden Schlichten kommt.

Durch Auswertung der erfassten Signale in der Maschinensteuerung ist es somit möglich, ohne zusätzliche Messzeit zu einer eindeutigen Feststellung zu gelangen, wann das Schruppwerkzeug soweit verschlissen ist, dass es wieder abgerichtet werden muss.

Für den gemessenen Wert der Umfangsposition UP kann (in Relation zum Grenzwert G) also ein maximaler noch akzeptabler Wert vorgegeben werden, bis zu dem mit dem Schrupp-Schleifwerkzeug weitergearbeitet werden kann. Wird der Grenzwert G unterschritten, veranlasst die Schleifmaschine automatisch das Abrichten des Schrupp-Schleifwerkzeugs 6.

In Figur 2 ist das Messsystem durch den Sensor 3 angedeutet, welches die Verzahnung 2 des Zahnrad 1 vermisst, wobei das Zahnrad um seine Drehachse a gedreht wird. Hierdurch können die geschruppte Oberfläche der Verzahnung 2 vermessen und insbesondere die genannten geometrischen Parameter ermittelt werden.

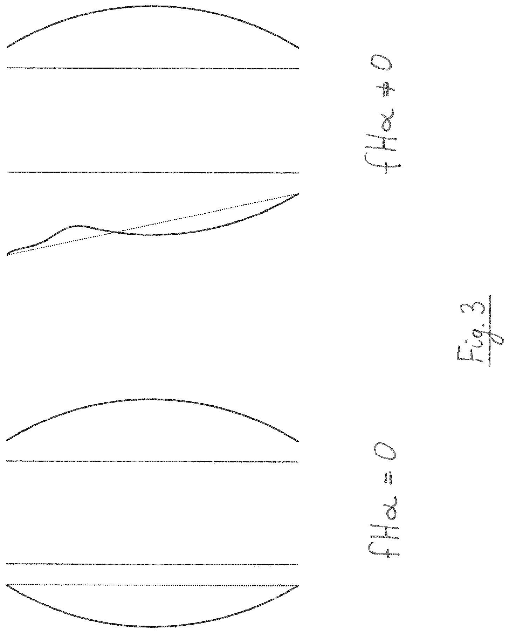

In Figur 3 ist schematisch angedeutet, wie sich der Profil-Winkel der Verzahnung 2 bei der durchgeführten Messung ergibt. Im linken Teilbild ist in Figur 3 zu sehen, dass der auftretende Profil-Winkelfehler fHα Null ist, d. h. der Schrupp-Schleifvorgang wurde ordnungsgemäß durchgeführt. Indes ist im rechten Teilbild in Figur 3 zu sehen, dass bei nunmehr bereits verschlissenem Schrupp-Schleifwerkzeug ein Profil-Winkelfehler fHα ungleich Null auftritt. Man kann erkennen, dass nach dem Schruppen zu viel Material an der Zahnflanke der Verzahnung im Zahnkopfbereich (oben) verblieben ist; demgemäß ist das Schrupp-Schleifwerkzeug, insbesondere die Schrupp-Schleifschnecke, in entsprechendem Fußbereich verschlissen.

Auch für den Profil-Winkelfehler fHα kann ein maximaler noch akzeptabler Wert vorgegeben werden, bis zu dem mit dem Schrupp-Schleifwerkzeug weitergearbeitet werden kann. Wird dieser Grenzwert überschritten, veranlasst die Schleifmaschine automatisch das Abrichten des Schrupp-Schleifwerkzeugs.

Demgemäß wird also für die Serienproduktion der Zahnräder eine in den Prozess integrierte Fehlergrenze für einen geometrischen Parameter festgelegt. Da die Standzeit des Schrupp-Schleifwerkzeugs zumeist hinreichend groß ist, kann der Fertigungsprozess so programmiert werden, dass nach einer gewissen Anzahl geschliffener Teile besagte Messung vorgenommen und dann beurteilt wird, ob die Fehlergrenze schon erreicht ist oder nicht. Hierdurch kann, abhängig von der gegebenen Situation der Vorbearbeitung der zu schleifenden Zahnräder, die Standzeit des SchruppWerkzeugs optimal ausgenutzt werden. Abgerichtet wird erst, wenn dies tatsächlich erforderlich ist. Gleichzeitig wird das Schlicht-Schleifwerkzeug bestmöglich vor vorzeitigem Verschleiß geschützt.

Ein Abrichten des Schrupp-Schleifwerkzeugs erfolgt also so rechtzeitig, dass das Schlicht-Schleifwerkzeug nicht in Gefahr gerät, die verbliebenen Fehler aus dem Schrupp-Arbeitsgang nicht mehr beheben zu können.

Insofern wäre der ideale anzustrebende Fall, dass das Abrichten des Schrupp-Schleifwerkzeugs möglichst genau dann erfolgt, wenn die vorgegebene Fehlergrenze genau erreicht wird. Das Potenzial des Schrupp-Schleifwerkzeugs würde so bestmöglich ausgenutzt.

Durch das vorgeschlagene Vorgehen kann auch ein vorzeitiges Abrichten des Schrupp-Schleifwerkzeugs vermieden werden, da festgestellt werden kann, dass es noch hinreichend tauglich ist.

Alternativ zu einem neuerlichen Abrichtvorgang des Schleifwerkzeugs, insbesondere einer Schleifschnecke, kommt auch in Frage, einen anderen Arbeitsbereich des Schleifwerkzeugs, d. h. insbesondere der Schleifschnecke, einzusetzen, was durch Shiften des Werkzeugs in seine Achsrichtung erfolgen kann.

Theoretisch möglich wäre es auch, erst nach dem Schlichten die beschriebene Messung vorzunehmen und dann indirekt auf den Verschleiß des SchruppWerkzeugs zu schließen. Da allerdings der Schlicht-Prozess insoweit bereits Fehler aus dem Schrupp-Prozess eliminiert hat, wäre ein solches Vorgehen sehr viel weniger effektiv als der vorgeschlagene Weg.

Während beim Einsatz abrichtfreier Schleifwerkzeuge (z. B. mit CBN belegte Stahlgrundkörper-Werkzeuge) separate Schleifscheiben bzw. Schleifschnecken für das Schruppen und das Schlichten eingesetzt werden, wird im Falle des Einsatzes von abrichtbaren Schleifwerkzeugen und insbesondere einer Schleifschnecke oft nur eine einzige Schnecke für das Schruppen und das Schlichten verwendet.

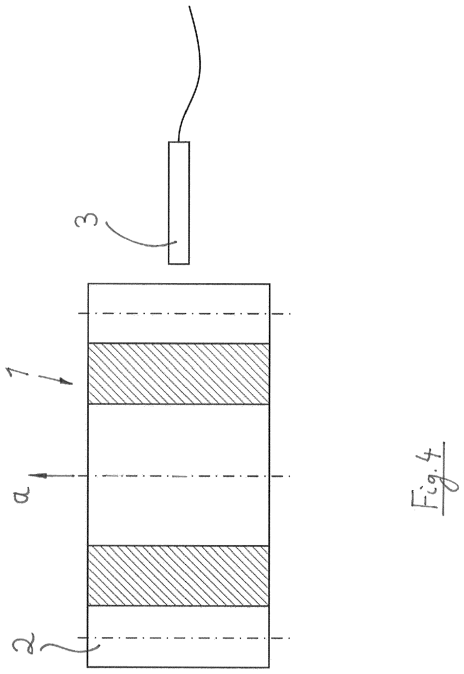

Für die Durchführung der erläuterten Messung des geometrischen Parameters nach dem Schruppen und vor dem Schlichten sind verschiedene Möglichkeiten in den Figuren 4 bis 7 dargestellt.

Im Falle der Figur 4 wird ein (einziger) Sensor 3 eingesetzt, der die Zahnflanken der geschruppten Verzahnung 2 vermisst. Hier wie für alle anderen erläuterten Messungen können beliebige Arten von Sensoren eingesetzt werden, insbesondere optischen Sensoren, die unter Einsatz eines Lasers vermessen.

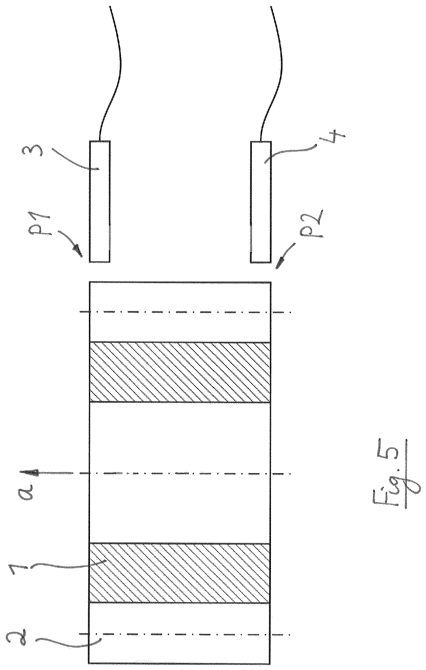

Bei der in Figur 5 dargestellten Lösung kommen zwei Sensoren 3 und 4 zum Einsatz, die an zwei axial versetzten Positionen P1 und P2 ihre jeweilige Messung vornehmen. Die beiden Sensoren 3 und 4 befinden sich hier etwa in den beiden axialen Endbereichen der Verzahnung 2 und vermessen hier die geschruppte Oberfläche der Zahnflanken.

Die Signale des Sensors oder der Sensoren werden von der (nicht dargestellten) Maschinensteuerung aufgenommen, die bei Rotation des Werkstücks 1 unter Berücksichtigung der zugehörigen Signale der Sensoren ermitteln kann, wie die Form der Zahnflanke ist.

Natürlich können auch mehr als zwei Messstellen vorgesehen werden, um eine verbesserte Datenbasis zu gewinnen. Die ist insbesondere dann angezeigt, wenn der Verlauf des Profil-Winkelfehler fHα erfasst werden soll.

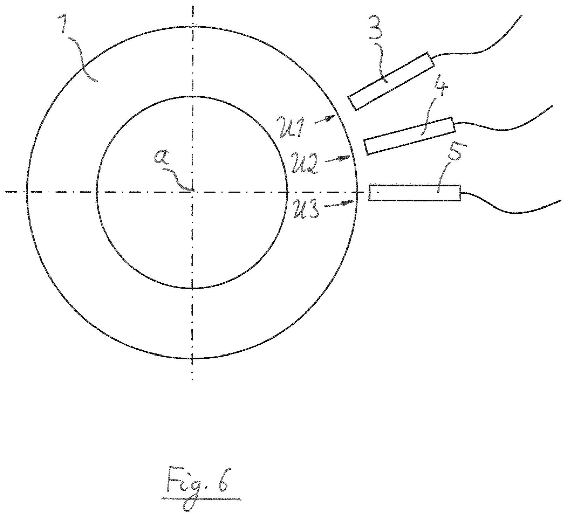

In Figur 6 ist zu sehen, das mit mehreren Sensoren, hier mit den drei Sensoren 3, 4 und 5, in Richtung der Drehachse a versetzt und gleichzeitig auch in Umfangsrichtung versetzt die Messung durchgeführt wird. Die drei Sensoren 3, 4, 5 sind nämlich an unterschiedlichen Umfangspositionen U1, U2 und U3 angeordnet. Hierdurch kann insbesondere bei engem Bauraum erreicht werden, dass dennoch alle benötigten Sensoren platzsparend untergebracht werden können. Dies gilt insbesondere im Falle einer geringen Zahnbreite.

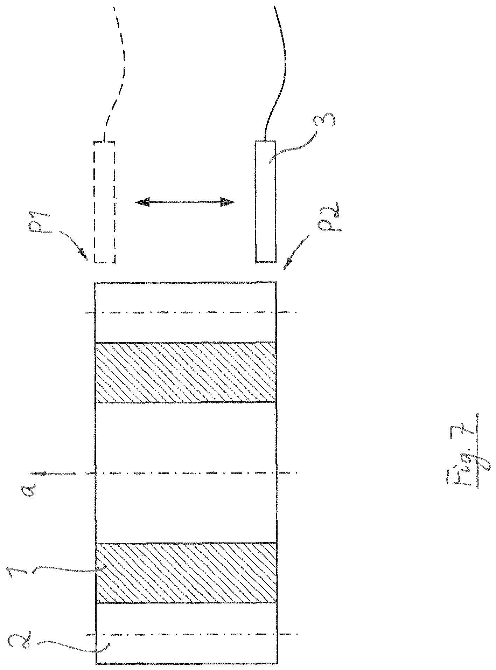

In Figur 7 ist eine Variante zu sehen, bei der in mehreren Ebenen mit nur einem einzigen Sensor 3 eine Messung erfolgen kann. Hierzu wird der Sensor 3 in Richtung des Doppelpfeils axial bewegt und gleichzeitig die gemessenen Signale aufgenommen. Somit wird hier dann ein spiralförmiges Signal aufgenommen, aus welchem die Maschinensteuerung die Oberfläche der Zahnflanke am jeweiligen Ort des Sensors 3 ermitteln kann. Natürlich ist es auch möglich, die Messung bei ortsfestem Sensor durchzuführen und diesen dann sukzessive zur Vermessung in mehreren Ebenen jeweils axial zu verschieben.

Die Sensoren 3, 4, 5 können entweder separat oder in einem Gehäuse untergebracht werden.

Für alle Messungen gilt, dass die Maschinensteuerung aus der (aktuellen) Position des Sensors bzw. der Sensoren und der Drehlage der Verzahnung 1 ermitteln kann, wo die Oberfläche der vermessenen Zahnflanke liegt, so dass die benötigte Information über die Oberfläche während des Schruppens gewonnen werden kann.

Das heißt, ist die relative Positionierung der Sensoren zueinander bekannt, ist es möglich, die Lage der Oberfläche der Zahnflanken durch entsprechende Umrechnung der Signale der Sensoren unter Berücksichtigung der Geometrie des Zahnrads (insbesondere des Schrägungswinkels bei Schrägverzahnung) zu ermitteln.

### Bezugszeichenliste:

- 1: Werkstück (Zahnrad)
- 2: Verzahnung
- 3: Sensor
- 4: Sensor
- 5: Sensor
- 6: Schrupp-Schleifwerkzeug (Schleifschnecke)
- 6': Position des Schleifwerkzeugs zu Beginn des Schruppens
- 6": Position des Schleifwerkzeugs am Ende des Schruppens

- a: Drehachse des Zahnrads

- P1: erste axiale Position
- P2: erste axiale Position
- U1: erste Umfangsposition
- U2: zweite Umfangsposition
- U3: dritte Umfangsposition

- fHα: Profil-Winkelfehler
- K: Kontaktpunkt
- UP: Umfangsposition des Zahnrads
- t: Zeit
- G: Grenzwert
- R: Rohteilwert
- S: Schruppwert

## Patentansprüche

1. Verfahren zum Schleifen eines Werkstücks (1) mit einer Verzahnung (2) oder einem Profil, wobei in der Schleifmaschine in einer einzigen Werkstückaufspannung in einem ersten Arbeitsschritt die Verzahnung (2) oder das Profil mit einem Schrupp-Schleifwerkzeug (6) vorbearbeitet wird und anschließend in einem zweiten Arbeitsschritt die Verzahnung (2) oder das Profil mit einem Schlicht-Schleifwerkzeug fertigbearbeitet wird, wobei simultan mit dem ersten Arbeitsschritt die Verzahnung (2) oder das Profil mittels mindestens eines Sensors (3, 4, 5) vermessen wird, wobei eine die Verzahnung (2) oder das Profil bestimmende geometrische Größe oder eine mit der Geometrie in Verbindung stehende Größe gemessen wird und wobei in der Maschinensteuerung die Abweichung der gemessenen geometrischen Größe oder der mit der Geometrie in Verbindung stehende Größe von einem Sollwert ermittelt wird,
**dadurch gekennzeichnet, dass**
zumindest als Schrupp-Schleifwerkzeug eine abrichtbare Schleifscheibe oder eine abrichtbare Schleifschnecke verwendet wird, wobei die Maschinensteuerung einen Abrichtvorgang für das Schrupp-Schleifwerkzeug veranlasst, wenn die Abweichung zwischen der gemessenen geometrischen Größe und deren Sollwert über einer vorgegebenen Grenze liegt.

2. Verfahren nach Anspruch 1, **dadurch gekennzeichnet, dass** die Maschinensteuerung ein Signal ausgibt, wenn die Abweichung zwischen der gemessenen geometrischen Größe und deren Sollwert über einer vorgegebenen Grenze liegt.

3. Verfahren nach Anspruch 1 oder 2, **dadurch gekennzeichnet, dass** als Schrupp-Schleifwerkzeug und als Schlicht-Schleifwerkzeug ein und dasselbe Werkzeug verwendet wird, wobei unterschiedliche Abschnitte des Werkzeugs für das Schruppen und für das Schlichten vorgesehen sind.

4. Verfahren nach einem der Ansprüche 1 bis 3, **dadurch gekennzeichnet, dass** die gemessene geometrische Größe die Zahnweite oder das Kugelmaß der Verzahnung ist.

5. Verfahren nach einem der Ansprüche 1 bis 3, **dadurch gekennzeichnet, dass** die gemessene geometrische Größe der Profil-Winkelfehler (fHα) der Verzahnung (2) ist.

6. Verfahren nach einem der Ansprüche 1 bis 5, **dadurch gekennzeichnet, dass** als Sensor (3, 4, 5) ein optisch wirkender Sensor, ein induktiv oder ein kapazitiv wirkender Sensor verwendet wird.

7. Verfahren nach Anspruch 6, **dadurch gekennzeichnet, dass** die Vermessung der Verzahnung (2) oder des Profils mit mindestens zwei Sensoren (3, 4, 5) erfolgt, die in Richtung der Drehachse (a) des Werkstücks (1) versetzt angeordnet sind.

8. Verfahren nach Anspruch 6, **dadurch gekennzeichnet, dass** die Vermessung der Verzahnung (2) oder des Profils mit mindestens zwei Sensoren (3, 4, 5) erfolgt, die in Umfangsrichtung des Werkstücks (1) versetzt angeordnet sind.

## Claims

1. Method for grinding a workpiece (1) with a toothing (2) or a profile, wherein in the grinding machine in a single workpiece clamping in a first working step the toothing (2) or the profile is pre-machined with a rough-grinding tool (6) and subsequently in a second working step the toothing (2) or the profile is finish-machined with a finishing grinding tool, wherein simultaneously with the first working step, the toothing (2) or the profile is measured by means of at least one sensor (3, 4, 5), wherein a geometric variable determining the toothing (2) or the profile or a variable connected to the geometry is measured, and wherein the deviation of the measured geometric variable or the variable connected to the geometry from a setpoint value is determined in the machine control,
**characterized in**
**that** a dressable grinding wheel or a dressable grinding worm is used at least as rough-grinding tool, wherein the machine control initiates a dressing operation for the rough-grinding tool if the deviation between the measured geometric variable and its setpoint value is above a predetermined limit.

2. Method according to claim 1, **characterised in that** the machine control emits a signal if the deviation between the measured geometric variable and its setpoint value is above a predetermined limit.

3. Method according to claim 1 or 2, **characterized in that** the same tool is used as the rough-grinding tool and as the finishing-grinding tool, wherein different sections of the tool are provided for roughing and for finishing.

4. Method according to one of claims 1 to 3, **characterised in that** the measured geometric variable is the tooth width or the spherical measure of the toothing.

5. Method according to one of claims 1 to 3, **characterised in that** the measured geometric variable is the profile angular error (fHα) of the toothing (2).

6. Method according to one of claims 1 to 5, **characterised in that** an optical sensor, an inductive sensor or a capacitive sensor is used as the sensor (3, 4, 5).

7. Method according to claim 6, **characterised in that** the measurement of the toothing (2) or the profile is carried out with at least two sensors (3, 4, 5) which are arranged offset in the direction of the rotation axis (a) of the workpiece (1).

8. Method according to claim 6, **characterised in that** the measurement of the toothing (2) or the profile is carried out with at least two sensors (3, 4, 5) which are arranged offset in the circumferential direction of the workpiece (1).

## Revendications

1. Procédé permettant de meuler une pièce (1) avec une denture (2) ou un profil, dans lequel sur la meuleuse, la denture (2) ou le profil est pré-usiné(e) à l'aide d'un outil de dégrossissage (6) en un seul serrage de pièce dans une première étape de travail, et ensuite, la denture (2) ou le profil est fini (e) à l'aide d'un outil de polissage de finition dans une deuxième étape de travail, dans lequel simultanément avec la première étape de travail, la denture (2) ou le profil est mesuré(e) au moyen d'au moins un capteur (3, 4, 5), dans lequel une grandeur géométrique déterminant la denture (2) ou le profil ou une grandeur en relation avec la géométrie est mesurée, et dans lequel dans le dispositif de commande de machine, l'écart par rapport à une valeur de consigne de la grandeur géométrique mesurée ou de la grandeur en relation avec la géométrie est établi,
**caractérisé en ce qu'**une meule pouvant être dressée ou une vis sans fin de meulage pouvant être dressée est utilisée au moins comme outil de dégrossissage, dans lequel le dispositif de commande machine provoque une opération de dressage pour l'outil de dégrossissage si l'écart entre la grandeur géométrique mesurée et sa valeur de consigne est situé au-dessus d'une limité prédéfinie.

2. Procédé selon la revendication 1, **caractérisé en ce que** le dispositif de commande machine émet un signal si l'écart entre la grandeur géométrique mesurée et sa valeur de consigne est situé au-dessus d'une limite prédéfinie.

3. Procédé selon la revendication 1 ou 2, **caractérisé en ce que** le même outil est utilisé comme outil de dégrossissage et comme outil de polissage de finition, différentes sections de l'outil étant prévues pour le dégrossissage et pour le polissage.

4. Procédé selon l'une quelconque des revendications 1 à 3, **caractérisé en ce que** la grandeur géométrique mesurée est l'écartement sur dents ou la mesure sphérique de la denture.

5. Procédé selon l'une quelconque des revendications 1 à 3, **caractérisé en ce que** la grandeur géométrique mesurée est l'erreur angulaire de profil (fHα) de la denture (2).

6. Procédé selon l'une quelconque des revendications 1 à 5, **caractérisé en ce qu'**un capteur à effet optique, un capteur à effet inductif ou un capteur à effet capacitif est utilisé comme capteur (3, 4, 5).

7. Procédé selon la revendication 6, **caractérisé en ce que** le mesurage de la denture (2) ou du profil est effectué à l'aide d'au moins deux capteurs (3, 4, 5) qui sont disposés de manière décalée en direction de l'axe de rotation (a) de la pièce (1).

8. Procédé selon la revendication 6, **caractérisé en ce que** le mesurage de la denture (2) ou du profil est effectué à l'aide d'au moins deux capteurs (3, 4, 5) qui sont disposés de manière décalée dans la direction circonférentielle de la pièce (1).
